(19) **Europäisches Patentamt / European Patent Office / Office européen des brevets**

(11) **EP 4 086 103 A1**

(12) # DEMANDE DE BREVET EUROPEEN

(43) Date de publication:
**09.11.2022 Bulletin 2022/45**

(21) Numéro de dépôt: **22171088.2**

(22) Date de dépôt: **02.05.2022**

(51) Classification Internationale des Brevets (IPC):
**B60L 3/00** (2019.01)     **B60L 1/00** (2006.01)
**B60L 1/02** (2006.01)     **B60L 1/14** (2006.01)
**B60L 3/12** (2006.01)     **B60L 58/10** (2019.01)
**B60L 58/12** (2019.01)     **B60L 58/16** (2019.01)
**B60L 58/18** (2019.01)     **G01R 31/3832** (2019.01)

(52) Classification Coopérative des Brevets (CPC):
**B60L 1/006; B60L 1/00; B60L 1/003; B60L 1/02;
B60L 1/14; B60L 3/003; B60L 3/0046;
B60L 3/0092; B60L 3/12; B60L 58/10; B60L 58/12;
B60L 58/16; B60L 58/18; G01R 31/3832;**
B60L 2200/26;      (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.05.2021 FR 2104642**

(71) Demandeurs:
• **ALSTOM Holdings**
**93400 Saint-Ouen-sur-Seine (FR)**

• **SNCF Voyageurs**
**93200 Saint-Denis (FR)**

(72) Inventeurs:
• **BARDIN, François**
**59810 LESQUIN (FR)**
• **HOUZE, Frédéric**
**59494 AUBRY-DU-HAINAUT (FR)**
• **LEROY, Thibaut**
**59100 ROUBAIX (FR)**

(74) Mandataire: **Lavoix**
**2, place d'Estienne d'Orves**
**75441 Paris Cedex 09 (FR)**

(54) **VOITURE DE VÉHICULE, NOTAMMENT FERROVIAIRE, COMPRENANT UN SYSTÈME DE SURVEILLANCE DU VÉHICULE ET PROCÉDÉ DE SURVEILLANCE ASSOCIÉ**

(57) La voiture de comprend une pluralité de batteries (24), un chargeur (26) associé à chacune des batteries (24) et au moins un équipement (32) susceptible d'être alimenté par la pluralité de batteries (24), et un système de surveillance du véhicule, le système de surveillance (20) comportant au moins un capteur (36) d'un paramètre d'état de batterie (24) pour chaque batterie, un réseau de communication (40) apte à recevoir des informations issues de chaque capteur (36) d'un paramètre d'état de batterie (24) et de chaque chargeur (26), et à transmettre les informations reçues à une unité de traitement (42), l'unité de traitement (42) étant propre à traiter des informations relatives à une batterie (24) dont le chargeur (26) associé est éteint ou défaillant à l'aide des informations reçues pour les autres batteries (24).

FIG.2

(52) Classification Coopérative des Brevets (CPC):
(Cont.)
B60L 2240/545; B60L 2240/547; B60L 2240/549;
B60L 2250/16

**Description**

La présente invention concerne une voiture de véhicule, notamment ferroviaire, comprenant une pluralité de batteries, un chargeur associé à chacune des batteries, au moins un équipement susceptible d'être alimenté par la pluralité de batteries, et un système de surveillance du véhicule.

Un véhicule ferroviaire est alimenté par une source d'énergie primaire, par exemple par un fil aérien de contact situé au-dessus du véhicule, ou par un rail spécifique d'alimentation. Il est connu que le véhicule ferroviaire comporte une ou une pluralité de batteries, chacune associée à un chargeur (éventuellement redondé), et prévues pour alimenter des équipements auxiliaires du véhicule ferroviaire, tels que la ventilation, l'éclairage ou les moyens de communication avec des passagers en cas de transport de voyageurs lorsque la source d'énergie primaire cesse d'alimenter le véhicule.

Il est souhaitable pour un conducteur ou un opérateur sur le véhicule de pouvoir connaître l'état de charge des batteries notamment lorsque le véhicule n'est pas alimenté par la source d'énergie primaire.

Habituellement, l'état de charge d'une batterie de véhicule ferroviaire est estimé à l'aide d'un voltmètre, ou d'un estimateur basé sur la tension. Une telle estimation est très peu précise, parce que l'évolution de la tension en fonction du temps lors d'une décharge de la batterie est quasi constante sur une portion importante du temps de décharge, et dépend de facteurs tels que la température et le courant de décharge.

Une autre option connue est un calculateur dédié à chaque batterie. Dans ce cas, en cas de perte d'un chargeur, c'est-à-dire lorsque le chargeur cesse de fonctionner ou lorsqu'il n'est plus connecté à une batterie, les autres batteries continuent d'être chargées par leur propre chargeur. Aussi, leur calculateur n'indique pas l'état de charge de la batterie dont le chargeur est perdu. L'information d'état de charge de l'ensemble des batteries n'est donc pas complète.

La présente invention a pour but de pallier les inconvénients listés ci-dessus.

A cet effet, la présente invention a pour objet une voiture de véhicule, notamment ferroviaire, comprenant une pluralité de batteries, un chargeur associé à chacune des batteries et au moins un équipement susceptible d'être alimenté par la pluralité de batteries, et un système de surveillance du véhicule, le système de surveillance comportant au moins un capteur d'un paramètre d'état de batterie pour chaque batterie, un réseau de communication apte à recevoir des informations issues de chaque capteur d'un paramètre d'état de batterie et de chaque chargeur, et à transmettre les informations reçues à une unité de traitement, l'unité de traitement étant propre à traiter les informations reçues en informations traitées et à transmettre les informations traitées, l'unité de traitement étant apte à traiter des informations relatives à une batterie dont le chargeur associé est éteint ou défaillant à l'aide des informations reçues pour les autres batteries.

Grâce à l'invention, un conducteur de véhicule, notamment ferroviaire, ou un exploitant ferroviaire reçoit des informations fiables sur l'état de charge des batteries et la durée restante de fonctionnement lorsque tout ou partie du véhicule fonctionne sur les batteries. L'invention tient compte des contraintes d'exploitation telles que des modes dégradés et des conditions d'exploitation telles que le roulage du véhicule, la maintenance du véhicule, le stockage du véhicule ou une perte d'alimentation par la source d'énergie primaire pouvant nécessiter une évacuation du fait de l'absence d'une fonction essentielle tel que l'éclairage par exemple.

Une voiture de véhicule ferroviaire selon l'invention peut comporter en outre l'une ou plusieurs des caractéristiques suivantes, prises seules ou selon toutes combinaisons techniquement envisageables :

- les informations traitées comprennent l'état de charge d'une batterie et/ou la profondeur de décharge d'une batterie et/ou une durée restante d'utilisation d'une batterie et/ou l'état de santé d'une batterie ;
- le réseau de communication est apte à transmettre les informations traitées à un dispositif d'affichage relié au réseau de communication via l'unité de traitement et/ou à un terminal fixe ou mobile à destination d'opérateurs extérieurs au véhicule ;
- l'unité de traitement est apte à estimer l'état de charge d'au moins une batterie de la voiture lors d'une mise sous tension du véhicule après une mise hors tension du véhicule ;
- le paramètre d'état de la batterie est choisi parmi la température de la batterie, la tension de la batterie, et le courant fourni à/par la batterie ;
- l'équipement alimenté par la pluralité de batteries est choisi parmi un ensemble d'équipements auxiliaires du véhicule.

La présente invention concerne également un procédé de surveillance d'une voiture de véhicule, comprenant la fourniture d'une voiture de véhicule selon l'invention,

le procédé comprenant une étape de traitement des informations relatives à une batterie dont le chargeur associé est éteint ou défaillant à l'aide des informations reçues pour les autres batteries.

Un procédé de surveillance selon l'invention peut comporter en outre l'une ou plusieurs des caractéristiques suivantes, prises seules ou selon toutes combinaisons techniquement envisageables :

- les informations traitées comprennent l'état de charge d'une batterie, la profondeur de décharge d'une batterie, une durée restante d'utilisation d'une batterie et/ou l'état de santé d'une batterie, et dans lequel la profondeur de décharge est calculée à partir d'une intégration des courants fournis à la batterie au cours du temps ;

- les informations traitées comprennent l'état de charge d'une batterie, la profondeur de décharge d'une batterie, une durée restante d'utilisation d'une batterie et/ou l'état de santé d'une batterie, et dans lequel la durée restante d'utilisation de la batterie est estimée en prenant en compte un mode de fonctionnement du véhicule ;
- le mode de fonctionnement du véhicule est choisi parmi un stockage du véhicule, une maintenance du véhicule, une perte de la source d'énergie primaire, ou une situation d'évacuation d'urgence, ou tout autre mode activé par une commande du conducteur ou automatique.

L'invention sera mieux comprise à la lecture de la description qui va suivre, donnée uniquement à titre d'exemple et faite en se référant aux figures annexées parmi lesquelles :

- la figure 1 représente schématiquement un véhicule ferroviaire selon un exemple de mode de réalisation de l'invention ;
- la figure 2 représente schématiquement un système de surveillance du véhicule ferroviaire de la figure 1 ;
- la figure 3 représente deux graphiques de la tension d'une batterie en fonction du temps au cours de la charge (en haut) et du courant d'une batterie en fonction du temps au cours de la charge (en bas) ;
- la figure 4 représente un graphique de la capacité disponible d'une batterie en fonction de la température et du courant de décharge ;
- la figure 5 représente un graphique de l'état de charge et de la profondeur de décharge d'une batterie en fonction du temps ;
- la figure 6 représente un exemple de profil de décharge d'une batterie en fonction du temps ; et
- la figure 7 représente un graphique de la capacité disponible d'une batterie en fonction du temps et d'une méthode d'estimation de la durée restante.

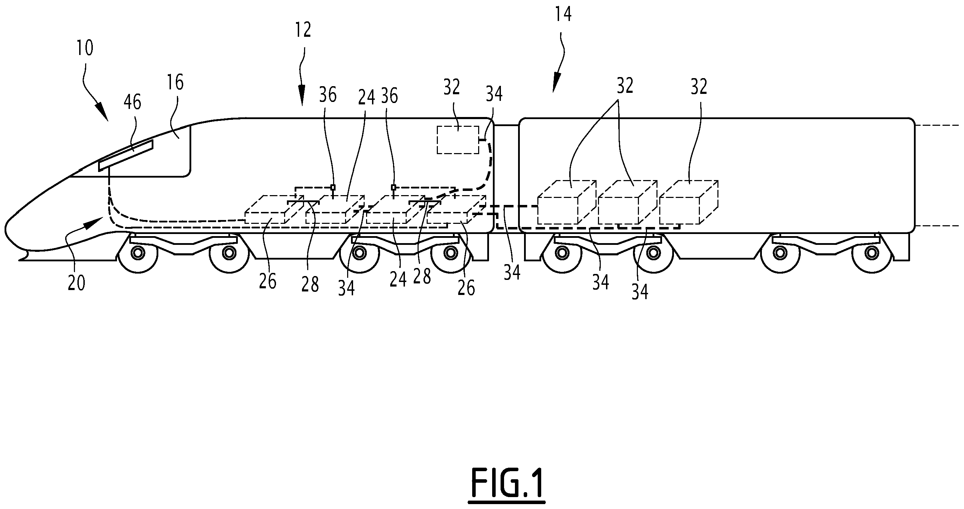

On a représenté sur la figure 1 un véhicule ferroviaire 10 comprenant une voiture d'extrémité 12 et éventuellement une voiture intermédiaire14 (dont une seule est représentée par souci de simplification, les autres voitures 14 étant similaires à celle décrite). Le véhicule ferroviaire 10 peut bien évidemment comprendre au moins une voiture d'extrémité supplémentaire et une pluralité de voitures intermédiaires formant une unité simple. Un ensemble de plusieurs unités simples formera un convoi, aussi appelé unité multiple, de configuration et de type de voitures identiques ou différentes.

La voiture d'extrémité 12 comprend ou non une cabine 16 ou un pupitre, fixe ou déporté, de conduite.

La voiture d'extrémité 12 comprend un système de surveillance du véhicule ferroviaire 20, une pluralité de batteries 24, et une pluralité de chargeurs 26 adaptés pour recharger chacune des batteries 24.

En variante, une des voitures intermédiaires 14 comprend le système de surveillance du véhicule ferroviaire 20, une pluralité de batteries 24, et une pluralité de chargeurs 26 adaptés pour recharger chacune des batteries 24.

Une batterie 24 et un chargeur 26 associé forment un ensemble chargeur-batterie 30. Chaque ensemble chargeur-batterie 30 peut être localisé dans la même voiture ou non. La totalité des ensembles chargeur-batterie 30 peut être dans la même voiture ou non.

Les batteries 24 sont typiquement des batteries nickel-cadmium.

En variante, les batteries 24 sont des batteries d'un type différent, de tout type envisageable pour un véhicule ferroviaire, par exemple lithium-ion ou plomb.

Chaque batterie 24 présente typiquement une masse comprise entre 100 kg et 2 tonnes.

Chaque chargeur 26 associé à une batterie 24 est typiquement relié à la batterie 24 par au moins un fil 28.

Un ensemble chargeur-batterie 30 alimente au moins un équipement 32.

Chaque équipement 32 est relié à au moins l'un des ensembles chargeur-batterie 30 au moyen d'au moins un fil 34 respectif branché à la batterie en parallèle du fil 28 reliant la batterie 24 à son chargeur 26 associé.

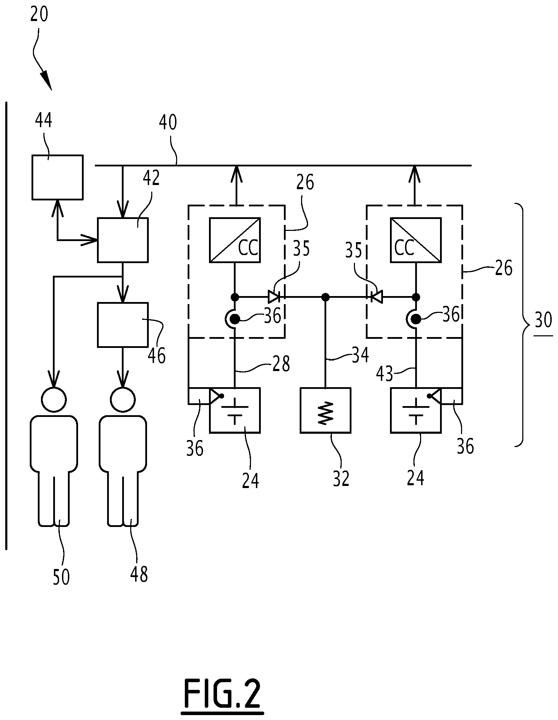

Comme cela est représenté sur la Figure 2, chaque chargeur 26 est par exemple couplé à une diode anti-retour 35 branchée sur le fil 34 reliant l'ensemble chargeur-batterie 30 à l'équipement 32 et dirigée du chargeur 26 vers l'équipement 32. La diode anti-retour 35 permet d'éviter un court-circuit entre les sources de tension en parallèle que sont chaque ensemble chargeur-batterie 30, potentiellement à des valeurs de tension différentes.

Un même équipement 32 peut être alimenté par une pluralité d'ensembles chargeur-batterie 30 connectés en parallèle, comme c'est le cas sur la Figure 2.

L'équipement 32 est choisi parmi un ensemble d'équipements auxiliaires du véhicule ferroviaire 10.

Les équipements 32 auxiliaires sont par exemple des équipements nécessitant de fonctionner même lorsqu'une source d'énergie primaire du véhicule est perdue.

Les équipements auxiliaires comprennent des équipements 32 essentiels et des équipements 32 non-essentiels.

Les équipements 32 non-essentiels sont par exemple l'éclairage de confort, les écrans de publicité, l'électronique de la climatisation, ou encore les prises USB pour les passagers.

Les équipements 32 essentiels sont par exemple l'éclairage d'urgence, la ventilation ou la communication avec les passagers.

Le système de surveillance 20, représenté sur la figure 2, comprend au moins un capteur 36 d'un paramètre d'état de batterie 24.

Le paramètre d'état de la batterie 24 est, par exemple, une température de la batterie 24, le courant, la tension.

La température est typiquement exprimée en degrés Celsius (°C).

Le courant est typiquement exprimé en Ampères (A).

La tension est typiquement exprimée en Volts (V).

De préférence, chaque batterie 24 est pourvue d'un capteur 36 d'un paramètre d'état de batterie.

Le système de surveillance 20 comprend également un réseau de communication 40 apte à recueillir des informations issues de chaque capteur 36 d'un paramètre d'état de batterie et de chaque chargeur 26, et à transmettre les informations reçues à une ou plusieurs unités de traitement 42.

Le réseau de communication 40 est typiquement un réseau Ethernet ou « Controller Area Network » (CAN).

L'unité de traitement 42 est configurée pour traiter les informations reçues en informations traitées, et à transmettre les informations traitées.

Des informations traitées comprennent par exemple l'état de charge d'une batterie 24, la profondeur de décharge d'une batterie 24, une durée restante d'utilisation d'une batterie 24 et/ou l'état de santé d'une batterie 24.

D'autres exemples de traitement d'informations reçues seront abordés plus loin dans la description.

L'unité de traitement 42 comprend typiquement un processeur.

Le système de surveillance 20 comprend également au moins une mémoire 44 propre à enregistrer au moins une partie des informations reçues et/ou traitées par l'unité de traitement 42.

La mémoire 44 enregistre les informations par exemple en continu ou à des instants aléatoires ou prédéterminés.

Des instants prédéterminés sont par exemple la mise en fonctionnement des chargeurs 26 ou l'arrêt de fonctionnement des chargeurs 26, ou encore des instants définis par une minuterie.

Selon une variante, le système de surveillance 20 comprend une pluralité de mémoires 44 qui enregistrent simultanément les informations de sorte à pallier la défaillance d'une des mémoires 44.

Selon l'invention, l'unité de traitement 42 est apte à utiliser les informations issues d'un chargeur 26 ou d'un capteur 36 associé à l'une des batteries 24 pour obtenir des informations relatives à une autre batterie 24, détaillé ci-après.

De préférence, le système de surveillance 20 comprend en outre un dispositif d'affichage 46 relié au réseau de communication 40 via l'unité de traitement 42, le dispositif d'affichage 46 étant propre à afficher au moins une information relative à au moins une batterie 24.

Le dispositif d'affichage 46 est par exemple un écran placé dans la cabine de conduite 16 à destination du conducteur 48 du véhicule ou du personnel de bord, comme représenté sur la Figure 1.

En variante ou en complément, le dispositif d'affichage 46 est un terminal fixe ou mobile, par exemple un téléphone, une tablette électronique, un ordinateur, à destination d'opérateurs 50 extérieurs au véhicule, par exemple au personnel de maintenance ou au personnel débarqué, par exemple de gestion du trafic ferroviaire en gare. Dans cette variante, l'unité de traitement 42 est apte à transmettre les informations à l'aide d'un protocole de communication sans fil.

De préférence, le réseau de communication 40, l'unité de traitement 42, la mémoire 44 et le dispositif d'affichage 46 sont ceux présents classiquement dans un véhicule ferroviaire.

Ainsi, le système de surveillance 20 selon l'invention utilise des moyens de calcul déjà disponibles permettant ainsi se passer d'un calculateur dédié.

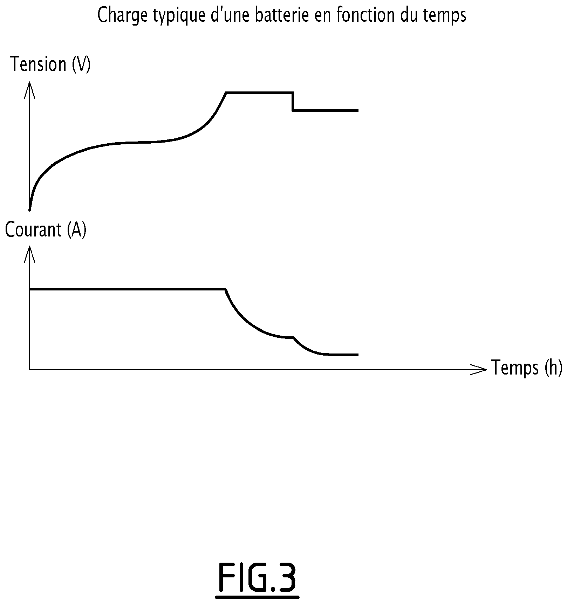

La charge d'une batterie se décompose typiquement en deux ou trois grandes étapes, comme cela est représenté schématiquement sur la figure 3. La première étape est une étape durant laquelle le courant est constant, et la tension augmente. La deuxième étape, optionnelle, est une étape durant laquelle la tension est sensiblement constante et élevée, appelée tension de « boost », et le courant diminue fortement. La dernière étape, troisième ou seconde selon le cas, est une étape durant laquelle la tension est sensiblement constante dans le temps, à une valeur inférieure à la valeur de tension de boost, dite « tension constante de floating » et durant laquelle le courant diminue de manière asymptotique. Cette dernière étape est appelée « floating » ou flottante.

Il est ici estimé que le « floating » est atteint lorsque le courant de charge est inférieur à une valeur prédéterminée de courant vers la batterie. En-deçà de cette valeur, la capacité que la batterie peut encore accumuler au cours de la charge est considérée comme négligeable.

Par « capacité de la batterie », il est entendu la quantité d'énergie électrique que la batterie est capable de restituer après avoir reçu une charge complète, pour un régime de courant de décharge donné, une tension d'arrêt définie et une température définie. Elle s'exprime usuellement en Ampère-heure (Ah).

Chaque batterie présente une capacité légèrement différente par construction, comprise dans une gamme de tolérance.

La valeur prédéterminée de courant vers la batterie est suffisamment faible pour que la capacité de la batterie une fois chargée soit comprise dans cette gamme de tolérance, et suffisamment élevée pour être détectée assez rapidement.

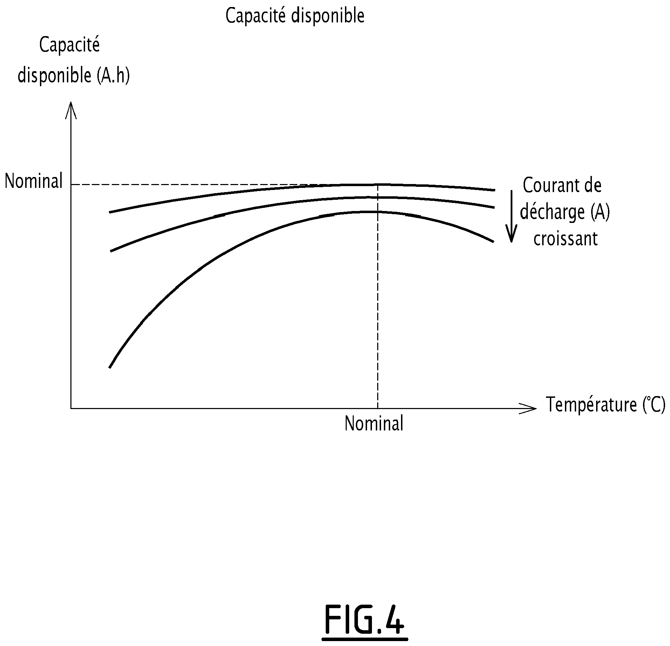

On définit une capacité disponible de la batterie en fonction notamment de la température, d'une capacité nominale, d'un courant, de la méthode de charge, comme cela est montré sur la figure 4, et en fonction notamment du vieillissement de la batterie.

La capacité disponible est typiquement exprimée en Ampère-heure.

On définit la capacité nominale d'une batterie par la quantité d'électricité exprimée en ampères-heures indiquée par le fabricant, que la batterie est capable de restituer un nombre d'heures minimum défini après charge, repos et décharge, dans les conditions spécifiées dans les normes associées.

Par exemple, par convention pour le Nickel-Cadmium, la capacité nominale d'une batterie est définie par la quantité d'électricité exprimée en ampères-heures indiquée par le fabricant, que la batterie est capable de restituer en 5 heures pour une température de 20°C.

On définit une profondeur de décharge par la capacité déchargée à la batterie.

La profondeur de décharge d'une batterie est exprimée en Ampère-heure.

La profondeur de décharge est au minimum de 0, lorsque la batterie est chargée ou dans la phase asymptotique de fin de charge, appelée « floating ». La profondeur de décharge est au maximum de la valeur de la capacité nominale.

On définit une profondeur de décharge initiale comme la profondeur de décharge mémorisée par la mémoire 44 à la précédente dé-préparation du véhicule ferroviaire à laquelle est ajoutée la profondeur de décharge due à la mise hors tension du véhicule, qui engendre une profondeur de décharge typiquement égale à la consommation résiduelle par le temps de mise hors tension.

Par « dé-préparation du véhicule ferroviaire », ou « sommeil du véhicule ferroviaire », il est entendu la mise hors tension du véhicule. Lorsque le véhicule est dé-préparé, la plupart des équipements ne sont plus alimentés.

Cela permet le démarrage du véhicule avec une batterie la plus chargée possible et d'éviter une consommation inutile par les équipements.

A la dé-préparation du véhicule ferroviaire 10, la mémoire 44 enregistre l'horaire de dé-préparation et la profondeur de décharge de chaque batterie 24.

Le profil d'utilisation des batteries ferroviaires est bien défini, grâce à la surveillance des actions du conducteur et aux commandes du système de surveillance 20 du véhicule ferroviaire 10 comme le délestage automatique des équipements 32 consommateurs par exemple.

Le délestage automatique des équipements consommateurs consiste à couper l'alimentation de certains équipements via un moyen électrotechnique, ou leur envoyer un signal, afin qu'ils réduisent à une valeur très faible le courant appelé aux batteries. Ce délestage peut être déclenché par un événement tel que la perte de la source d'alimentation primaire ou d'un ou plusieurs chargeurs de batteries, et éventuellement une temporisation. Un délestage peut aussi, en combinaison ou en remplacement, être déclenché par un seuil de tension mesuré à un bus d'alimentation.

Chaque mode de fonctionnement du véhicule 10 est bien défini, et par conséquent le courant et la consommation d'énergie aux batteries 24 sont déjà connus.

Grâce à cela, pour chaque mode de fonctionnement du véhicule 10, par exemple choisi parmi un stockage du véhicule 10, une maintenance du véhicule 10, une perte de la source d'énergie primaire, ou une situation d'évacuation d'urgence, ou tout autre mode activé par une commande du conducteur ou automatique, il est défini un paramètre de courant moyen de batterie.

Le paramètre de courant moyen de la batterie est égal à la moyenne des courants fournis à la batterie dans un mode de fonctionnement du véhicule 10 défini.

L'évolution de la profondeur de décharge lorsque le véhicule est hors tension provient des équipements 32 qui consomment de l'énergie en permanence, par exemple des systèmes de communication sol/bord, des modules de réveil du véhicule ferroviaire 10 à distance, ou encore des feux de stationnement par exemple.

Au réveil du véhicule ferroviaire 10, c'est-à-dire lors de la mise sous tension du véhicule 10, l'unité de traitement 42 calcule la profondeur de décharge initiale comme suit :

**[Math 1]**

$$profondeur\ de\ d\acute{e}charge\ initiale = profondeur\ de\ d\acute{e}charge\ lors\ de\ la\ pr\acute{e}c\acute{e}dente$$

$$d\acute{e}pr\acute{e}paration + (horaire\ de\ r\acute{e}veil - horaire\ de\ la\ pr\acute{e}c\acute{e}dente\ d\acute{e}pr\acute{e}paration)$$

$$* courant\ moyen\ de\ la\ batterie\ lorsque\ le\ v\acute{e}hicule\ est\ hors\ tension$$

La profondeur de décharge initiale calculée est mémorisée par la mémoire 44. De préférence, la mémoire 44 mémorise la profondeur de décharge initiale à chaque mise hors tension du véhicule 10.

On définit un rendement de charge par le rapport d'énergie restituée pendant la décharge sur l'énergie emmagasinée pendant la charge. Un rendement de 80 % signifie que 80 % de l'énergie fournie pendant la charge de la batterie est restituée par celle-ci pendant sa décharge.

La profondeur de décharge est calculée par l'unité de traitement 42 comme suit :

$$[\text{Math} \quad 2] \quad profondeur\ de\ décharge = profondeur\ de\ décharge\ initiale +$$

$$intégrale\ des\ courants\ fournis\ à\ la\ batterie\ par\ rapport\ au\ temps *$$

$$rendement\ de\ charge\ (\text{optionnellement})$$

Une information immédiate et précise de l'état de charge n'est pas possible, du fait de l'allure plate de la courbe de tension de la batterie en fonction du temps au cours de la décharge, et de la dépendance de la tension au courant et à la température par exemple.

L'état de charge d'une batterie 24 est calculé par l'unité de traitement 42 comme suit :

$$[\text{Math 3}]\ Etat\ de\ charge = \frac{(capacité\ disponible - profondeur\ de\ décharge)}{capacité\ disponible}$$

où l'état de charge est exprimé en pourcentage.

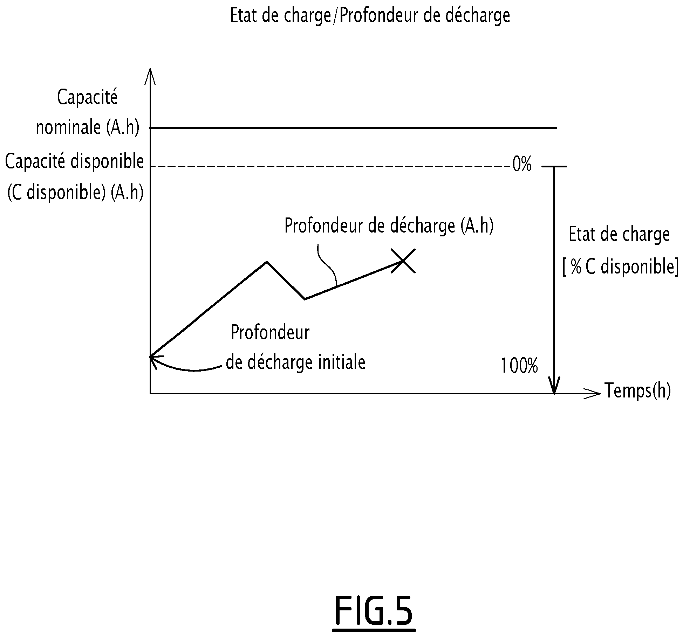

La figure 5 montre l'évolution de l'état de charge et de la profondeur de décharge d'une batterie en fonction du temps.

Selon l'invention, il est considéré que la batterie 24 est chargée à 100% lorsque l'état flottant est atteint.

A ce stade, l'efficacité de la charge diminue considérablement et l'état de charge de la batterie peut être considéré comme plein.

Lors du processus de charge, le courant est intégré au facteur de rendement de charge près. En arrivant à l'état flottant, la valeur d'état de charge estimée peut être inférieure à 100%. Cependant, parce que l'état flottant a été détecté, la variable « profondeur de décharge » est placée à 0.

Par combinaison, l'état de charge est alors à 100%.

L'état flottant est régulièrement atteint grâce au fonctionnement régulier des chargeurs 26 et à leur courant de charge suffisamment important. Cela permet d'effacer une erreur potentielle d'intégration de la profondeur de décharge.

Soit à titre d'exemple, une batterie ayant une capacité nominale de 110Ah, et une capacité disponible de 100Ah, à une température de -5°C, et pour un courant maximal consommable par le véhicule ferroviaire de 30A.

Après plusieurs étapes de charge et de décharge, la profondeur de décharge est par exemple de 30Ah. L'état de charge est alors égal à (100Ah-30Ah) /100Ah = 70 %.

De préférence, le système de surveillance 20 est configuré pour calculer un état de santé des batteries 24.

L'état de santé d'une batterie 24 est égal au rapport de la capacité disponible maximum de la batterie à un âge t sur la capacité nominale, où la capacité disponible maximum et la capacité nominale sont évaluées selon le même profil normalisé, par exemple après charge, repos et décharge de 5 heures.

L'état de santé des batteries 24 est ici calculé par l'unité de traitement 42.

Pendant la charge, le « floating » est détecté comme indiqué plus haut lorsque le courant de charge est inférieur à une valeur prédéterminée de courant vers la batterie 24.

Une détection trop précoce du « floating », c'est-à-dire une détection du « floating » alors que la batterie n'est que peu chargée, par exemple à 50% de sa capacité nominale, montre une perte importante de capacité des cellules d'une batterie conduisant à une impédance plus élevée.

Selon un mode de réalisation préféré, une information précisant la capacité chargée lors de la détection de la fin de la charge (« floating ») est transmise par le dispositif d'affichage 46 au conducteur, et/ou par le terminal pour le personnel de maintenance et/ou pour le personnel débarqué.

Cette information permettra de déclencher dès que nécessaire une tâche de maintenance telle que la régénération des cellules ou batteries endommagées par exemple, via une charge à forte tension et cyclage, ou le remplacement des cellules ou batteries endommagées.

Une durée restante estimée d'utilisation de la batterie peut ensuite être calculée pour chaque batterie 24 par l'unité de traitement 42.

Pour un véhicule ferroviaire 10, comme expliqué ci-dessus, le profil d'utilisation des batteries 24 est bien connu dans les différentes conditions d'exploitation du véhicule 10, telles que la maintenance du véhicule 10, le stockage du véhicule 10, une perte d'alimentation de la source d'énergie primaire, ou tout autre mode activé par une commande du conducteur ou automatique.

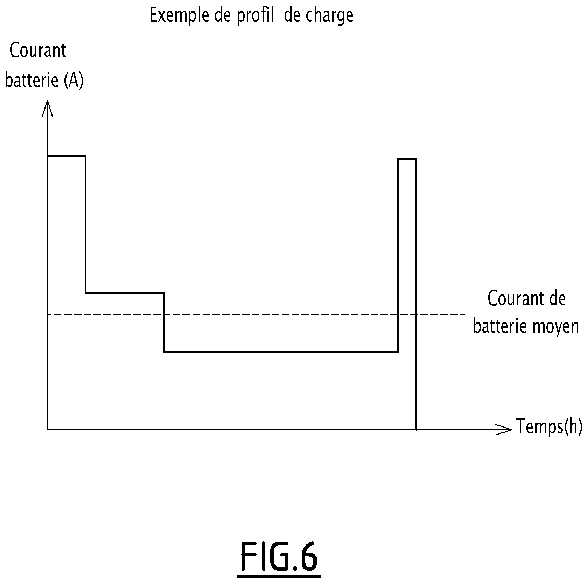

Un exemple de profil est représenté sur la figure 6.

Le profil de la figure 6 représente par exemple un profil de décharge où se présente une perte de la source d'énergie primaire du véhicule ferroviaire 10. Tous les équipements 32 consommateurs sont actifs pendant un temps donné, afin de rendre transparente une perte transitoire de la source d'énergie primaire. Une succession de délestages est appliquée de façon automatique par temporisation, mesure de la tension, ou encore action volontaire du conducteur directement ou à distance. Ces délestages sont appliqués afin d'effacer la puissance d'équipements 32 non-essentiels et préserver l'énergie dans la batterie 24 pour les équipements 32 essentiels.

En fin de profil, optionnellement, une re-préparation du véhicule 10 ou une remise en route des équipements 32 est effectuée, par exemple pour évacuer le véhicule 10 ou remettre celui-ci en état de roulage si la source d'énergie primaire est à nouveau disponible.

On définit également pour chaque batterie 24 une capacité restante. La capacité restante est égale à la capacité disponible à laquelle est retranchée la profondeur de décharge définies plus haut.

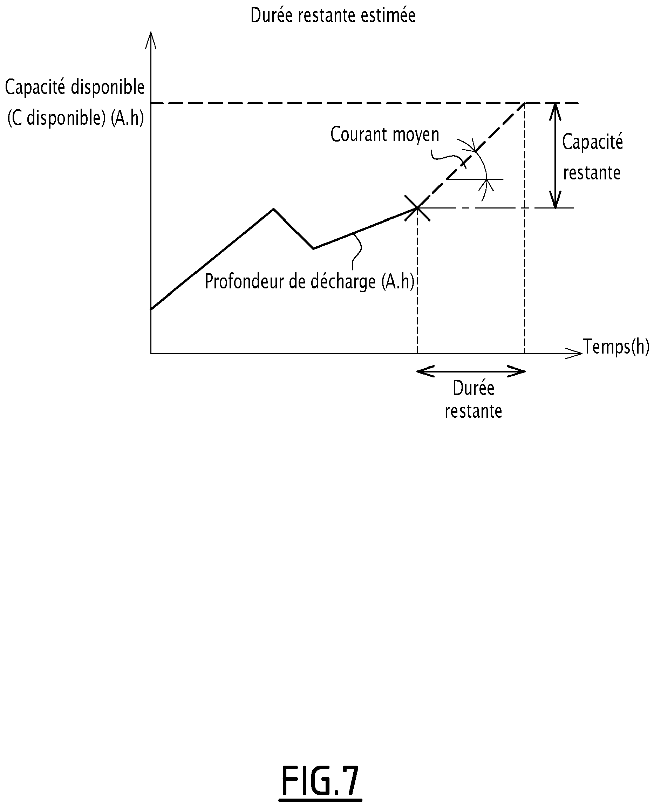

La durée restante estimée d'utilisation de la batterie est égale au rapport de la capacité restante sur le courant moyen à la batterie 24 dans le mode de fonctionnement du véhicule 10 en cours, comme cela est représenté sur la figure 7.

Selon un mode de réalisation préféré, une information précisant la durée restante estimée d'utilisation de la batterie est transmise par le dispositif d'affichage 46 au conducteur, et/ou par le terminal pour le personnel de maintenance et/ou pour le personnel débarqué.

De préférence, seule la durée restante estimée d'utilisation de la batterie minimale, calculée pour chaque batterie 24, est transmise au conducteur. En effet, la perte d'une batterie 24 peut entraîner une diminution voire une perte de fonctions essentielles telles que l'éclairage d'urgence, la ventilation ou la communication avec les passagers.

De plus, selon l'invention, l'unité de traitement 42 est apte à utiliser les informations issues d'un chargeur 26 et/ou d'un capteur 36 associé à l'une des batteries 24 pour obtenir des informations relatives à une autre batterie 24.

Par exemple, le courant de décharge et la température mesurés pour l'une des batteries 24 sont utilisés pour estimer l'état de charge de l'autre batterie 24.

Cela permet de s'affranchir de défaillances lorsque, par exemple, le chargeur 26 de l'autre batterie 24 est éteint ou en panne, c'est-à-dire qu'il ne fournit plus tout ou partie de l'énergie nécessaire à la charge de l'autre batterie 24, ou le chargeur 26 de l'autre batterie 24 est déconnecté du réseau de communication 40.

Le procédé de surveillance selon l'invention comprend ainsi une étape de traitement des informations relatives à une batterie 24 dont le chargeur 26 associé est éteint ou défaillant à l'aide des informations reçues pour les autres batteries 24.

Un exemple d'obtention de la température et du courant de décharge d'une première batterie 24 dont le chargeur 26 est déficient à partir de la température et du courant de décharge d'une deuxième batterie 24 est détaillé ci-dessous pour deux chargeurs 26, dont les informations de l'un des chargeurs 26 sont indisponibles ou erronées.

### [Math 4]

$$Température\ batterie\ 1\ =\ Température\ batterie\ 2$$

$$Si\ Courant\ batterie\ 2\ >\ 0\ (décharge),\ alors$$

$$Courant\ batterie\ 1 =\ Courant\ batterie\ 2\ x\ Coefficient\ de\ déséquilibre\ (optionnel)$$

$$Sinon,$$

$$Courant\ batterie\ 1\ =\ 0\ (pas\ de\ charge)$$

Où « Température batterie1 » désigne la température de la première batterie dont le chargeur est défaillant ;
« Température batterie2 » désigne la température de la deuxième batterie ;
« Courant batterie 1 » désigne le courant fourni à la première batterie dont le chargeur est défaillant ;
« Courant batterie 2 » désigne le courant vers la deuxième batterie ; et
« Coefficient de déséquilibre » désigne un coefficient de déséquilibre, qui représente la différence de courant pouvant apparaître entre plusieurs batteries à la décharge, en raison de la répartition des équipements 32 consommateurs sur le véhicule ferroviaire 10 et des impédances des fils. Il peut être estimé par calcul d'impédances et de chutes de tensions dans le circuit électrique 34 et/ou mesuré lors d'essais de décharge des batteries sur véhicule ferroviaire 10.

A partir de la température et du courant de décharge déterminés pour la batterie 24 dont le chargeur est défaillant, l'unité de traitement 42 calcule la capacité disponible et la profondeur de décharge de la batterie 24 dont le chargeur 26 est défaillant, comme détaillé ci-dessus.

Ensuite, l'unité de traitement 42 calcule l'état de charge de la batterie 24 dont le chargeur 26 est défaillant, comme détaillé ci-dessus.

En variante ou en complément, l'unité de traitement 42 calcule la durée restante estimée d'utilisation de la batterie 24 dont le chargeur 26 est défaillant selon le mode de fonctionnement du véhicule, comme détaillé ci-dessus.

Dans l'hypothèse où tous les chargeurs 26 sont éteints ou défaillants, un courant de décharge et une température peuvent être fixés, selon l'état du véhicule ferroviaire 10, par exemple la maintenance du véhicule, le stockage du véhicule ou une perte d'alimentation par la source d'énergie primaire.

## Revendications

1. Voiture (12) de véhicule, notamment ferroviaire (10), comprenant une pluralité de batteries (24), un chargeur (26) associé à chacune des batteries (24) et au moins un équipement (32) susceptible d'être alimenté par la pluralité de batteries (24), et un système de surveillance du véhicule (20), le système de surveillance (20) comportant au moins un capteur (36) d'un paramètre d'état de batterie (24) pour chaque batterie, un réseau de communication (40) apte à recevoir des informations issues de chaque capteur (36) d'un paramètre d'état de batterie (24) et de chaque chargeur (26), et à transmettre les informations reçues à une unité de traitement (42), l'unité de traitement (42) étant propre à traiter les informations reçues en informations traitées et à transmettre les informations traitées, **caractérisée en ce que** l'unité de traitement (42) est apte à traiter des informations relatives à une batterie (24) dont le chargeur (26) associé est éteint ou défaillant à l'aide des informations reçues pour les autres batteries (24).

2. Voiture (12) de véhicule selon la revendication 1, dans laquelle les informations traitées comprennent l'état de charge d'une batterie (24) et/ou la profondeur de décharge d'une batterie (24) et/ou une durée restante d'utilisation d'une batterie (24) et/ou l'état de santé d'une batterie (24).

3. Voiture (12) de véhicule selon la revendication 1 ou 2, dans laquelle le réseau de communication (40) est apte à transmettre les informations traitées à un dispositif d'affichage (46) relié au réseau de communication (40) via l'unité de traitement (42) et/ou à un terminal fixe ou mobile à destination d'opérateurs (50) extérieurs au véhicule (10).

4. Voiture (12) de véhicule selon l'une quelconque des revendications 1 à 3, dans laquelle l'unité de traitement (42) est apte à estimer l'état de charge d'au moins une batterie (24) de la voiture (12) lors d'une mise sous tension du véhicule ferroviaire (10) après une mise hors tension du véhicule ferroviaire (10).

5. Voiture (12) de véhicule selon l'une quelconque des revendications 1 à 4, dans laquelle le paramètre d'état de la batterie (24) est choisi parmi la température de la batterie (24), la tension de la batterie (24), et le courant fourni à/par la batterie (24).

6. Voiture (12) de véhicule selon l'une quelconque des revendications 1 à 5, dans laquelle l'équipement (32) alimenté par la pluralité de batteries (24) est choisi parmi un ensemble d'équipements auxiliaires du véhicule (10).

7. Procédé de surveillance d'une voiture (12) de véhicule, comprenant la fourniture d'une voiture (12) de véhicule selon l'une quelconque des revendications 1 à 6,
le procédé comprenant une étape de traitement des informations relatives à une batterie (24) dont le chargeur (26) associé est éteint ou défaillant à l'aide des informations reçues pour les autres batteries (24).

8. Procédé de surveillance d'une voiture (12) de véhicule selon la revendication 7, dans lequel les informations traitées comprennent la profondeur de décharge d'une batterie (24), et l'état de charge d'une batterie (24) et/ou une durée restante d'utilisation d'une batterie (24) et/ou l'état de santé d'une batterie (24), et dans lequel la profondeur de décharge est calculée à partir d'une intégration des courants fournis à la batterie (24) au cours du temps.

9. Procédé de surveillance d'une voiture (12) de véhicule selon la revendication 7 ou 8, dans lequel les informations traitées comprennent une durée restante d'utilisation d'une batterie (24), et l'état de charge d'une batterie (24), et/ou la profondeur de décharge d'une batterie (24), et/ou l'état de santé d'une batterie (24), et dans lequel la durée restante d'utilisation de la batterie (24) est estimée en prenant en compte un mode de fonctionnement du véhicule (10).

10. Procédé de surveillance d'une voiture (12) de véhicule selon la revendication 9, dans lequel le mode de fonctionnement du véhicule (10) est choisi parmi un stockage du véhicule (10), une maintenance du véhicule (10), une perte de la source d'énergie primaire, ou une situation d'évacuation d'urgence, ou tout autre mode activé par une commande du conducteur ou automatique.

FIG.1

# FIG.2

Charge typique d'une batterie en fonction du temps

## FIG.3

Capacité disponible

Capacité
disponible (A.h)

Nominal ─ ─ ─ ─ ─ ─ ─ ─ ─ ─ ─ ─ ─ ─

Courant de
décharge (A)
croissant

Température (°C)

Nominal

FIG.4

Etat de charge/Profondeur de décharge

## FIG.5

Exemple de profil de charge

Courant
batterie (A)

Courant de
batterie moyen

Temps(h)

# FIG.6

FIG.7

Europäisches
Patentamt

European
Patent Office

Office européen
des brevets

# RAPPORT DE RECHERCHE EUROPEENNE

Numéro de la demande

EP 22 17 1088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 208 882 A1 (MITSUBISHI ELECTRIC CORP [JP]) 23 août 2017 (2017-08-23) * abrégé * * figures 2, 6 * * alinéas [0013] – [0059] * ----- | 1-10 | INV. B60L3/00 B60L1/00 B60L1/02 B60L1/14 B60L3/12 |
| A | DE 10 2010 045514 B4 (AUDI AG [DE]) 29 mars 2018 (2018-03-29) * abrégé * * alinéas [0013] – [0016] * ----- | 1-10 | B60L58/10 B60L58/12 B60L58/16 B60L58/18 G01R31/3832 |
| A | US 2009/130538 A1 (KAITA KEIJI [JP] ET AL) 21 mai 2009 (2009-05-21) * abrégé * * alinéas [0018] – [0019] * ----- | 1-10 | |
| A | US 2020/070684 A1 (MARUNO NAOKI [JP]) 5 mars 2020 (2020-03-05) * alinéas [0060] – [0096] * * abrégé * ----- | 1-10 | |
| X | JP 2018 098143 A (MITSUBISHI MOTORS CORP) 21 juin 2018 (2018-06-21) | 1,2,5,7 | DOMAINES TECHNIQUES RECHERCHES (IPC) B60L G01R |
| A | * alinéas [0004] – [0006] * * abrégé * ----- | 3,4,6, 8-10 | |
| A | US 2017/045587 A1 (KIM JIN HO [KR] ET AL) 16 février 2017 (2017-02-16) * abrégé * * figures 1, 6, 7 * * revendications 14-20 * ----- | 1-10 | |
| A | US 5 931 245 A (UETAKE AKIHITO [JP] ET AL) 3 août 1999 (1999-08-03) * colonne 16, lignes 3-60 * ----- | 1-10 | |
| A | WO 2020/066260 A1 (SANYO ELECTRIC CO [JP]) 2 avril 2020 (2020-04-02) * revendications 1-7 * | 1-10 | |

-/--

Le présent rapport a été établi pour toutes les revendications

| Lieu de la recherche | Date d'achèvement de la recherche | Examinateur |
|---|---|---|
| La Haye | 23 août 2022 | Schmitt, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 22 17 1088**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| | & US 2021/339651 A1 (MUKAE HIDETSUGU [JP] ET AL) 4 novembre 2021 (2021-11-04) * revendications 1-7 * ----- | | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 23 août 2022 | Schmitt, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 17 1088

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-08-2022

| Document brevet cité au rapport de recherche | Date de publication | Membre(s) de la famille de brevet(s) | Date de publication |
|---|---|---|---|
| EP 3208882 A1 | 23-08-2017 | EP 3208882 A1 | 23-08-2017 |
| | | JP 6203420 B2 | 27-09-2017 |
| | | JP WO2016059720 A1 | 27-04-2017 |
| | | US 2017305285 A1 | 26-10-2017 |
| | | WO 2016059720 A1 | 21-04-2016 |
| DE 102010045514 B4 | 29-03-2018 | DE 102010045514 A1 | 15-03-2012 |
| | | WO 2012034668 A2 | 22-03-2012 |
| US 2009130538 A1 | 21-05-2009 | CN 101443673 A | 27-05-2009 |
| | | JP 2007311065 A | 29-11-2007 |
| | | US 2009130538 A1 | 21-05-2009 |
| | | WO 2007132729 A1 | 22-11-2007 |
| US 2020070684 A1 | 05-03-2020 | CN 110871709 A | 10-03-2020 |
| | | JP 6997056 B2 | 17-01-2022 |
| | | JP 2020038102 A | 12-03-2020 |
| | | US 2020070684 A1 | 05-03-2020 |
| JP 2018098143 A | 21-06-2018 | JP 6699538 B2 | 27-05-2020 |
| | | JP 2018098143 A | 21-06-2018 |
| US 2017045587 A1 | 16-02-2017 | KR 20170020072 A | 22-02-2017 |
| | | US 2017045587 A1 | 16-02-2017 |
| US 5931245 A | 03-08-1999 | CN 1167464 A | 10-12-1997 |
| | | DE 69628637 T2 | 29-04-2004 |
| | | EP 0808738 A1 | 26-11-1997 |
| | | JP 3729862 B2 | 21-12-2005 |
| | | KR 970706985 A | 01-12-1997 |
| | | TW 404362 U | 01-09-2000 |
| | | US 5931245 A | 03-08-1999 |
| | | WO 9710967 A1 | 27-03-1997 |
| WO 2020066260 A1 | 02-04-2020 | CN 112753148 A | 04-05-2021 |
| | | JP WO2020066260 A1 | 16-09-2021 |
| | | US 2021339651 A1 | 04-11-2021 |
| | | WO 2020066260 A1 | 02-04-2020 |

EPO FORM P0460

Pour tout renseignement concernant cette annexe : voir Journal Officiel de l'Office européen des brevets, No.12/82